# FASCICULE DE BREVET EUROPEEN

(11) **EP 0 701 936 B1**
(45) Date de publication et mention de la délivrance du brevet: **30.12.1998**
(21) Numéro de dépôt: 95440060.2
(22) Date de dépôt: 14.09.1995
(51) Int. Cl.: B61D 3/18, B61D 17/20

(54) **Passerelle déformable entre deux plans de chargement portés par des châssis successifs notamment ferroviaires**
Verformbare Übergangsbrücke zwischen den Ladeflächen von zwei aufeinander folgenden Untergestellen, insbesondere Eisenbahn-Untergestellen
Deformable bridge between two loading platforms carried by adjacent underframes, especially railway underframes

(30) Priorité: 16.09.1994 FR 9411229
(43) Date de publication de la demande: 20.03.1996
(73) Titulaire: LOHR INDUSTRIE, 67980 Hangenbieten (FR)
(72) Inventeur: Andre, Jean-Luc, F-67210 Obernai (FR)
(74) Mandataire: Metz, Paul

(56) Documents cités:
- EP-A- 0 240 407
- DE-A- 3 305 062
- FR-A- 860 652

## Description

La présente invention concerne une passerelle déformable entre les plans de chargement ou platelages de deux châssis successifs, ferroviaires ou routiers, articulés entre eux et porteurs d'un chargement, notamment de véhicules, passerelle conçue pour pouvoir placer la charge en un endroit quelconque du plan de chargement y compris sur cette passerelle.

L'intensification des échanges économiques ainsi qu'une stratégie de production industrielle dite "en flux tendu" ont largement contribué à accroître le trafic routier marchand au cours de la dernière décennie.

Cette situation nouvelle ne va pas sans poser de graves difficultés : saturation et détérioration des infrastructures routières, augmentation du nombre et de la gravité des accidents de la route, risques écologiques et atteinte à la santé publique car les produits transportés sont souvent toxiques et inflammables.

Pour remédier à ces difficultés, de nombreuses solutions ont été envisagées. La solution la plus fréquemment avancée est du type "rail+route" et consiste à transporter majoritairement les marchandises par le rail, seuls les trajets entre les sites de production-livraison et les lieux de chargement-déchargement ferroviaires étant encore couverts par la route.

On propose, par exemple, de construire de véritables "autoroutes ferroviaires" représentant des trains de grande longueur chargés de véhicules de transport routier.

Le roulage du véhicule, par exemple articulé du type tracteur et semi-remorque ou camion avec ou sans remorque, sur les wagons, nécessite l'existence d'une suite de plans porteurs ou platelages séparés par une passerelle, par exemple un élément de plancher assurant la continuité de passage entre deux wagons successifs.

Cet élément de plancher constitue la prolongation pivotante d'un des plans de chargement. Il nécessite, pour éviter la détérioration des pneus, que les roues ne soient jamais en appui à proximité immédiate de l'extrémité de l'autre plan de chargement. Cette importante limitation ne permet pas de charger les véhicules sans se préoccuper de leur position relative par rapport à la passerelle.

La facilité d'exploitation recherchée impose de ne pas avoir à se soucier de la présence d'un repère quelconque ou d'une limite physique dont il faudrait tenir compte lors du chargement des véhicules sur les platelages, c'est-à-dire bénéficier d'une indépendance totale entre la position des véhicules à transporter et celle des plans porteurs y compris les passerelles.

Dans le cadre de l'invention, on souhaite pouvoir charger à bord du convoi routier ou ferroviaire un nombre maximum de véhicules, immédiatement à la suite les uns des autres, sans aucune considération quant à leur emplacement et celui de leurs essieux sur le plan de chargement et quant à leur longueur hors-tout. En particulier, on souhaite pouvoir supporter l'essieu d'un véhicule transporté, sans détérioration des pneus, au droit de la passerelle assurant la continuité de passage entre deux planchers porteurs successifs.

En se reportant aux solutions et aux moyens existant dans l'état de la technique, on est obligé d'éviter la présence des roues entre la passerelle et le wagon qui est mobile par rapport à elle, sous peine d'endommager les pneus suite aux mouvements des structures dans les virages.

Si l'on veut pouvoir stationner à n'importe quel endroit avec comme contrainte de se retrouver avec une roue placée sur une zone déformable ou une zone de recouvrement de structures mobiles, il faut rendre la zone supportant les roues indépendante des mouvements dans les virages.

Ces conditions ne peuvent pas être remplies dans le cas d'une passerelle simple, même pivotante par rapport à un plan de chargement, car les roues du véhicule placé sur le châssis suivant vont riper sur cette passerelle dans les virages, ce qui risque d'endommager les pneumatiques, voire de fausser la direction du véhicule.

La présente invention vise à remédier à ces inconvénients en proposant une passerelle déformable reliant les platelages de deux châssis porteurs, par exemple d'une autoroute ferroviaire, comportant une structure déformable de liaison permettant de créer une zone fixe d'appui sous la charge des roues de l'essieu d'un véhicule placé en un endroit quelconque du plan de chargement indifféremment de l'un ou de l'autre des plans porteurs ou platelages.

A cette fin, la passerelle déformable comporte les caractéristiques de la revendication 1 selon l'invention.

L'intérêt de l'invention porte sur la réalisation d'une zone que la charge rend fixe et qui reste fixe dans les virages, scindant la surface de la passerelle en deux zones déformables dans les virages.

Plus particulièrement, la passerelle déformable se compose d'une succession de lames par exemple métalliques, transversales, parallèles, couchées sur chant, prenant appui par leurs extrémités sur deux bras longitudinaux et latéraux de support et de guidage avec interposition entre les lames et, notamment, entre les extrémités de chaque lame, d'un intercalaire en matière élastique.

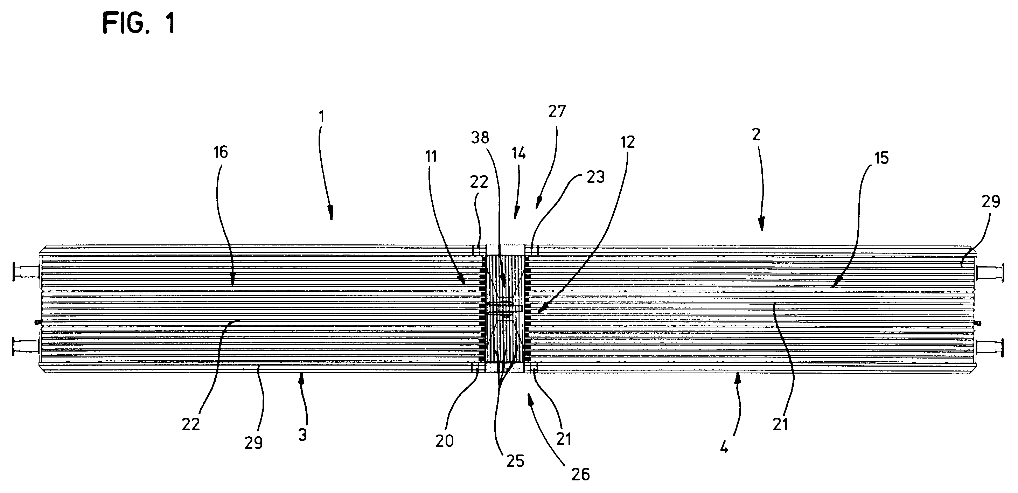

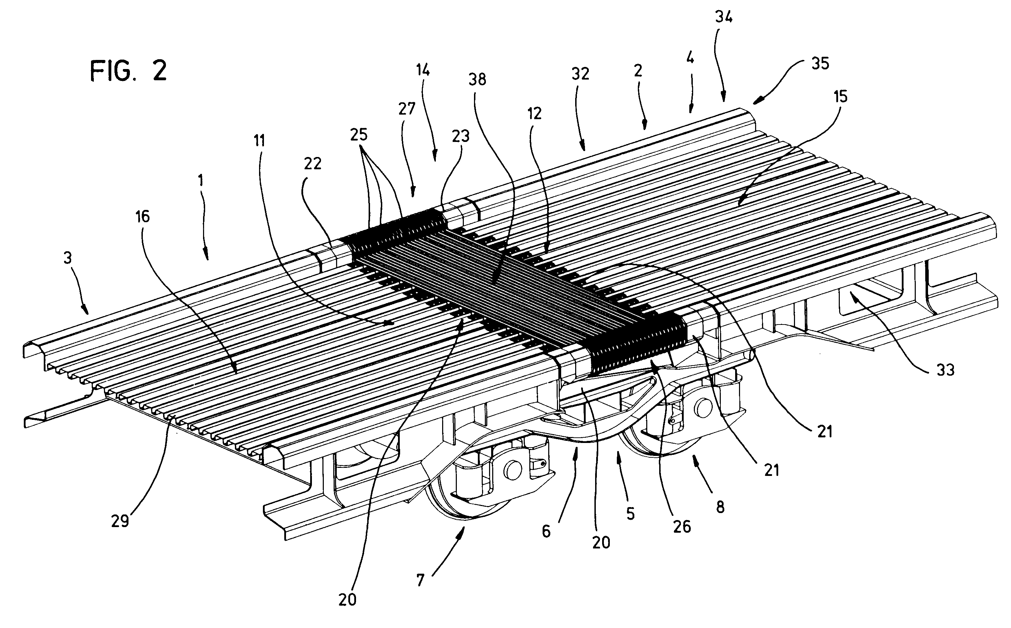

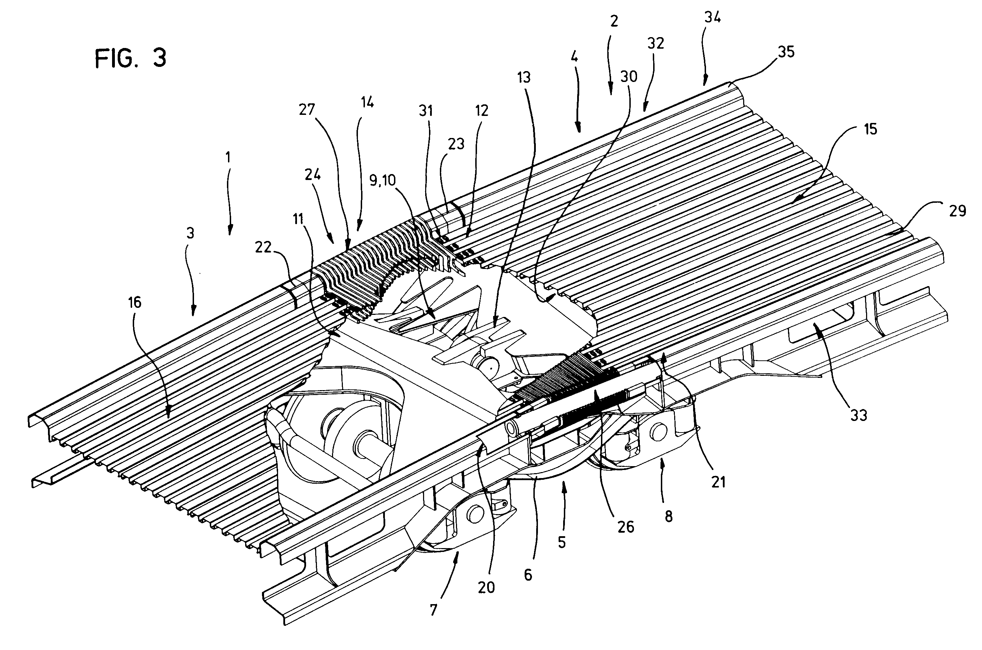

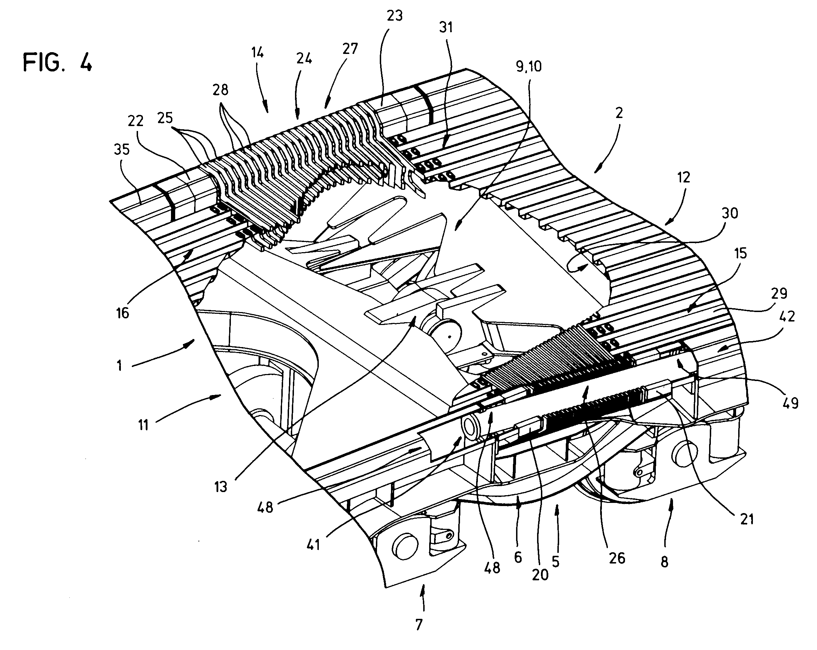

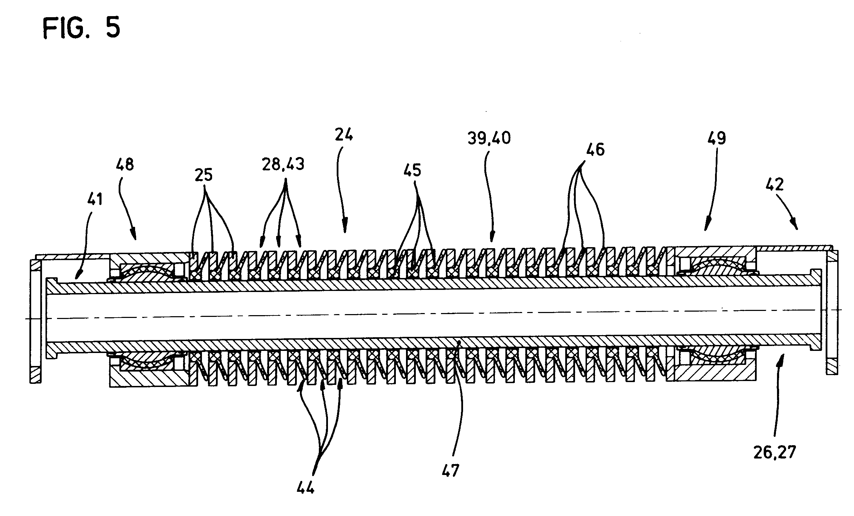

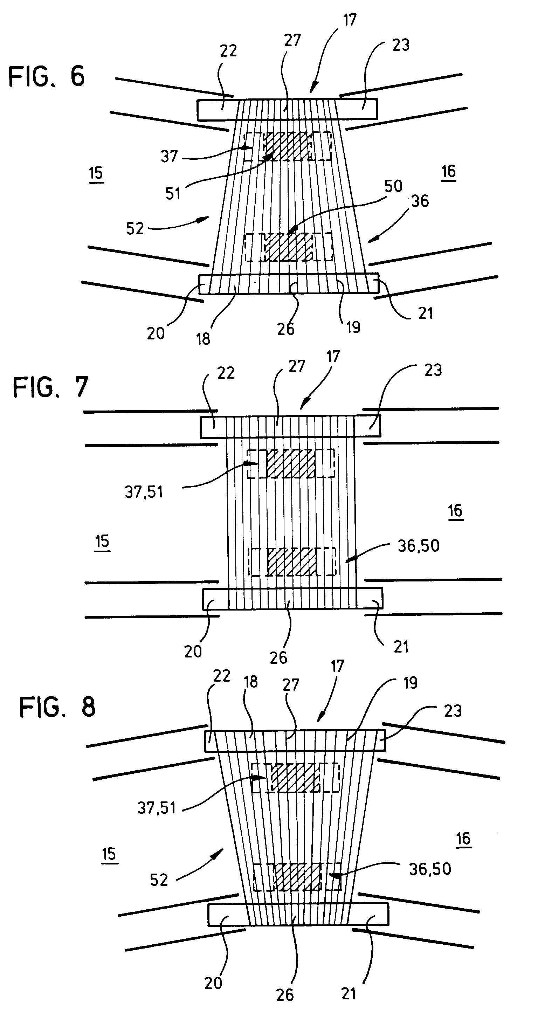

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue d'ensemble en plan de deux structures-wagons successives revêtues chacune d'un platelage et séparées par la passerelle déformable selon l'invention ;
. les figures 2 et 3 sont des vues en perspective illustrant la passerelle déformable selon l'invention en ligne droite et en virage ;
. la figure 4 est une vue en perspective de détail montrant la constitution de la passerelle déformable et sa liaison avec les bras de support et de guidage ;
. la figure 5 est une vue en coupe longitudinale le long d'un bras de support et de guidage ;
. les figures 6 à 8 sont des schémas simplifiés illustrant le travail des éléments constituant la passerelle déformable.

Bien que la présente invention ne se rapporte pas exclusivement au passage entre deux structures ferroviaires, on décrira cependant ci-après, à titre d'exemple, une application à des trains servant d'autoroutes ferroviaires.

Les trains destinés à servir d'autoroutes ferroviaires sont constitués d'une succession de châssis-wagon 1 et 2 équipés de plates-formes 3 et 4 porteuses d'un chargement. Ces châssis 1 et 2 sont articulés entre eux de façon conventionnelle et comprennent des organes de liaison connus au voisinage de leur jonction. Ils peuvent reposer sur un bogie commun ou être équipés chacun d'un essieu propre et de tampons.

Dans l'exemple représenté, il s'agit de bogies ferroviaires 5 de type connu, communs aux deux châssis ferroviaires 1 et 2 successifs. Ainsi, le bogie 5 comporte son propre châssis 6, monté suspendu sur deux essieux ferroviaires 7 et 8. De façon générale, le châssis 6 de ce bogie commun 5 porte une articulation centrale complexe 9 appelée crapaudine 10 permettant le pivotement de direction dans les virages.

Les extrémités 11 et 12 des châssis-wagon 1 et 2 sont articulées de façon classique sur l'ensemble mécanique de la crapaudine 10 et reliées entre elles par une articulation de liaison 13.

L'invention procède de l'idée générale inventive qui consiste à imaginer une passerelle déformable 14 assurant le passage au-dessus de l'articulation de liaison 13 entre deux châssis-wagon 1 et 2 successifs et la continuité entre les deux plans porteurs ou platelages 15 et 16 qui les recouvrent, passerelle déformable 14 présentant les caractéristiques générales suivantes.

Les éléments constitutifs de cette passerelle 14 coopèrent entre eux de façon à créer, sous l'effet d'une charge, une zone fixe d'appui 17 restant fixe dans les virages et à conserver, de part et d'autre de cette zone fixe d'appui 17, des zones adjacentes 18 et 19 déformables dans les virages pour absorber, tout au long de la trajectoire, les contractions et les extensions consécutives aux mouvements relatifs des extrémités adjacentes et correspondantes 20,21 et 22,23 des deux platelages porteurs successifs 15 et 16 reliés par la passerelle 14.

Selon une variante de réalisation décrite ci-après, la passerelle déformable 14 est constituée d'une succession longitudinale 24 de lames 25, par exemple métalliques, présentant des découpes longitudinales, et comportant des extensions d'extrémités portées par des éléments longitudinaux de support et de guidage 26 et 27 bordant la passerelle 14. La zone fixe d'appui 17 est formée par celles des lames 25 qui sont sous charge, alors que les autres lames 25 sont libres, et par conséquent leur orientation peut se modifier dans les virages de part et d'autre de la zone fixe d'appui 17 pour absorber les déplacements de virage et assurer la continuité de la passerelle 14. Des formes intercalaires 28 en matière élastique peuvent assurer une précontrainte destinée à limiter les vibrations et les bruits.

Selon le premier aspect de l'invention, on fait passer tous les efforts principaux de traction et de compression dans les structures ferroviaires proprement dites, à savoir les châssis-wagon 1 et 2 et les bogies 5 et on monte sur ceux-ci les plans porteurs ou platelages 15 et 16 recevant le chargement, par exemple un plan en tôle pliée 29 ondulée et perforée selon des ondulations 30 presque carrées et des perforations embouties 31 de forme oblongue permettant d'améliorer l'adhérence et de réaliser des points d'ancrage pour les cales amovibles ou autres moyens immobilisant la charge. La surface utile de ces plans porteurs ou platelages 15 et 16 est bordée, le long de chacun de ses côtés 32 et 33, par un retour de structure 34 conformé en un rebord longitudinal 35 d'une certaine hauteur constituant un guide pour les véhicules en mouvement de chargement ou de déchargement.

Conformément à l'invention, entre chaque platelage 15 et 16 et au niveau de la zone commune d'articulation 9 au bogie commun 5 on prévoit, comme interface de continuité entre deux platelages successifs 15 et 16, une passerelle déformable 14 assurant le passage au-dessus de l'articulation de liaison 13, destinée à éviter le glissement forcé des pneus 36 et 37 dans les virages et, par voie de conséquence, leur détérioration, passerelle destinée également à absorber les déplacements relatifs dans les virages des extrémités en regard 20,21 et 22,23 des platelages 15 et 16.

Selon l'invention, la passerelle déformable 14 présente un nombre de lames 25 non chargées suffisant pour absorber les déplacements des extrémités en regard 20,21 et 22,23 des platelages adjacents 15 et 16 dans les virages et, sous une forme préférée, elle présente une longueur adaptée pour n'accepter qu'une seule ligne d'essieu.

Selon une autre variante, la passerelle 14 doit présenter une aptitude à un affaissement local ponctuel au droit des pneus 36 et 37 ou sur la zone fixe d'appui 17 des roues et, de part et d'autre de cette zone fixe d'appui 17, présenter une déformation suffisante en extension et en compression pour pouvoir permettre l'ouverture en éventail avec sommet à droite ou à gauche selon le sens du virage.

Les dernières figures ont pour but d'illustrer schématiquement cette déformation en éventail.

Selon une forme de réalisation préférée décrite ci-après, la passerelle déformable 14 est constituée d'un plan-support 38 formé d'une succession longitudinale de lames, par exemple métalliques 25, transversales, placées parallèles et côte à côte sur toute la longueur de la passerelle 14.

Comme on le voit plus précisément sur la figure 5, ces lames 25 sont montées par leurs extrémités 39 conformées en anneaux 40 sur les deux éléments de support et de guidage latéraux et parallèles 26 et 27 entre lesquels s'étend la passerelle 14. Ces supports 26 et 27 à extrémités 41 et 42 sont de forme tubulaire et disposés longitudinalement en prolongation des bordures des platelages adjacents 15 et 16. Ils servent de maintien et de guides aux lames de soutien 25 qui sont montées directement sur ces supports 26 et 27 ou par l'intermédiaire de formes intercalaires 28 en matière élastique.

Dans ce dernier cas, ces lames 25 sont maintenues parallèles entre elles et en disposition, couchées sur chant, par l'interposition entre leurs extrémités 39 de pièces intercalaires 43 en matière élastique, par exemple des rondelles tronconiques 44 à épaulement d'extrémité 45 et à jupe conique 46, comme représenté sur la coupe longitudinale de la figure 5, dont l'épaulement 45 de chaque rondelle 44 reçoit à calage l'extrémité 39 d'une lame, par exemple métallique 25.

Pour filtrer les bruits et les vibrations, la succession des extrémités 39 des lames 25 avec interposition des rondelles élastiques 44 est montée sur les éléments de support et de guidage 26 et 27 avec précontrainte en déformation élastique par l'écrasement, plus ou moins prononcé, de ces rondelles.

Comme indiqué, les parties latérales terminales de la passerelle 14 s'appuient de part et d'autre sur les éléments de support et de guidage latéraux 26 et 27 que l'on appellera ci-après bras de support et de guidage.

Chacun de ceux-ci se compose d'une barre ou d'un tube cylindrique longitudinal 47 monté par ses extrémités 41 et 42 dans les extrémités en regard 20,21 et 22,23 de deux platelages successifs 15 et 16 par l'intermédiaire d'articulations palières 48 et 49. Ces articulations palières doivent autoriser le déplacement longitudinal, le pivotement et la composition de ces mouvements de manière à transmettre entre les extrémités qu'elles relient les mouvements de roulis, de tangage, de lacet et la composition de ceux-ci, et permettre les déformations corrélatives de la passerelle 14.

Pour ces articulations palières, il peut s'agir d'articulations du type rotule ou rotulées comme représenté sur la figure 5.

Les extrémités 39 des lames 25 entourent les bras de support et de guidage 26 et 27, mais il peut s'agir d'un simple accrochage ou d'un maintien d'extrémité dans des formes élastiques adaptées. Le but est de fournir à chacune des lames 25 sous charge la possibilité de s'immobiliser par contact avec une autre surface, ceci, par exemple, suite à une flexion avec ou sans abaissement ou à un blocage individuel adapté au niveau des extrémités 39 des lames 25.

On pourra ainsi prévoir un simple appui direct des lames 25 sur chacune de leurs extrémités 39 sur ou dans une pièce 28,43 en matière élastique portant sur les bras de support et de guidage 26 et 27.

Ainsi, l'effort dû à la charge appliqué sur une lame 25, se répercutera sur chacune de ses extrémités 39. Cet effort provoquera le blocage des extrémités 39, par exemple par appui-blocage sur chacun des bras de support 26 et 27, alors que les lames 25 non chargées resteront libres en mouvement au niveau de leurs extrémités 39.

Bien entendu, d'autres moyens de blocage des extrémités 39 entrant dans le cadre de l'invention sont possibles. Ceci notamment dans la version dans laquelle le chant inférieur des lames 25 entre en contact pour immobilisation avec la surface de châssis 6 ou celle du bloc de l'articulation de liaison et, en particulier, avec des structures localisées de celle-ci.

De même, on peut envisager de façon générale, mais plus particulièrement dans le cas de deux wagons, d'utiliser les tampons des wagons en tant que bras de support et de guidage 26 et 27, ces tampons gardant leur fonction première. On peut également utiliser des éléments dont la forme se rapproche de celle des tampons de wagon et leur faire remplir les deux fonctions ci-dessus.

On évite ou, du moins, on réduit fortement les dommages aux pneus 36 et 37 des roues du camion qui riperaient sur un platelage 15,16 soumis à des mouvements de déplacement latéraux dans les virages.

Le fonctionnement décrit ci-après s'avère relativement simple. Il concerne les roues d'un essieu, mais peut s'appliquer à une charge quelconque.

Les roues d'un même essieu d'un véhicule à transporter ou toute autre charge, viennent chacune en contact d'appui avec la passerelle déformable 25 sur une zone 50,51 de largeur limitée qui deviendra la zone fixe d'appui 17. Cette zone s'étend transversalement à l'axe de ligne droite du train en raison de la position longitudinale du camion. Elle couvre plusieurs lames 25 à la fois. Par l'effet du poids, les lames 25 sous charge s'immobiliseront, par exemple en se déformant, pour venir en contact avec une surface d'appui étendue ou localisée juste inférieure ou en se bloquant par chacune de leurs extrémités 39 sous l'effet de la charge.

La zone d'appui ainsi créée est la zone fixe d'appui 17 définie ci-dessus, autour de laquelle la passerelle 14 se déforme dans les virages.

Ces déformations se produiront de part et d'autre de cette zone fixe d'appui 17 selon une figure géométrique en éventail 52, comme on peut le voir sur les dessins. En effet, les forces de déformation consécutives à la prise de virage se répercuteront simultanément sur les bras de support et de guidage 26 et 27 et les extrémités 39 des lames 25 libres, c'est-à-dire non chargées, se resserreront d'un côté jusqu'en butée ou en comprimant légèrement les surfaces intercalaires en matière élastique et s'écarteront de l'autre par le simple mouvement de rapprochement ou d'écartement des extrémités en regard 20,21 et 22,23 des platelages 15 et 16.

Les dernières figures illustrent le resserrement des extrémités 39 des lames 25 d'un côté de la zone fixe d'appui 17 et leur écartement de l'autre côté.

Ces déplacements s'effectueront sur les et le long des bras de support et de guidage 26 et 27 qui bordent le passage 14.

Autrement dit, seules les lames 25 non chargées sont libres et donc mobiles. Elles se déplacent librement jusqu'en butée de leurs extrémités latérales 39 d'un même côté contre les intercalaires élastiques 43 pour absorber les mouvements des extrémités en regard 20,21 et 22,23 des platelages 15 et 16.

Au cours de ces mouvements, les rondelles élastiques intercalaires 43 joueront le rôle de ressort en compression puis en relâchement.

La déformation de part et d'autre de la zone fixe d'appui 17 permet de garantir le non-ripage des pneus 36 et 37 des véhicules transportés dans les virages de la voie, par exemple ferrée, et de ne pas générer de réaction en raison du virage.

De plus, il faut remarquer que lorsque le train circule à vide, aucune lame 25 n'est immobilisée, ce qui lui permet d'aborder des virages plus serrés, notamment d'emprunter des voies d'accès à des installations de maintenance.

Pour faciliter l'entretien et les réparations, la passerelle 14 est réalisée démontable des platelages adjacents 15 et 16, permettant ainsi de faciliter l'accès à l'articulation de liaison 13.

Il convient de rappeler ici que l'invention ne se limite pas au passage d'articulation entre deux structures ferroviaires consécutives, mais s'étend au contraire à tous les véhicules routiers articulés porteurs d'un chargement ou transporteurs de personnes.

## Revendications

1. Passerelle déformable reliant deux plans porteurs ou platelages (15) et (16) de deux châssis (1) et (2) successifs, passerelle s'étendant au-dessus de l'articulation de liaison (13) entre les deux châssis, les deux plans ou platelages étant porteurs d'un chargement formé par exemple de véhicules routiers, l'ensemble des moyens précités pouvant constituer en succession linéaire un train ferroviaire ou routier, caractérisée par une structure déformable s'étendant entre deux éléments latéraux de liaison et les extrémités correspondantes des platelages et comprenant une zone d'immobilisation rendue fixe par l'appui d'une charge, par exemple les roues d'un essieu, et comprenant par rapport à cette zone fixe au moins une zone déformable (18) et/ou (19) destinée(s) à absorber les déplacements d'éloignement et de rapprochement en virage des extrémités correspondantes en regard (20,21) et (22,23) des deux platelages successifs (15) et (16).

2. Passerelle déformable selon la revendication 1, caractérisée en ce que la zone rendue fixe est une zone indéformable.

3. Passerelle déformable selon la revendication 1 ou 2, caractérisée en ce que la zone rendue fixe est une zone fixe d'appui (17) résultant d'une déformation élastique de matière ou de structure vers le bas, sous l'effet de la charge, pour aboutir à une immobilisation de cette zone (17) au moins dans les virages.

4. Passerelle déformable selon la revendication 1 ou 2, caractérisée en ce que la zone rendue fixe est une zone fixe d'appui (17) résultant du déplacement vers le bas, sous l'effet de la charge, d'une structure porteuse simple ou multiple en vue de son blocage par ses extrémités et/ou par sa face inférieure.

5. Passerelle déformable selon la revendication 1 ou 2, caractérisée en ce que la zone rendue fixe est une zone fixe d'appui (17) résultant de la déformation et du déplacement vers le bas, sous l'effet de la charge, d'une structure porteuse ou d'une pluralité de structures porteuses, en vue de son blocage par ses extrémités et/ou par sa face inférieure.

6. Passerelle déformable selon l'une quelconque des revendications précédentes, caractérisée en ce que la structure 14 réunissant les extrémités correspondantes (20,21) et (22,23) des plans de chargement ou platelages (15) et (16) est susceptible de flexion ou d'affaissement local au droit du contact d'appui de la charge jusqu'à une base d'appui en vue d'un appui-immobilisation sur cette base, la structure de la passerelle (14) étant déformable dans son plan en extension ou en compression en dehors de la zone d'immobilisation.

7. Passerelle déformable selon la revendication précédente, caractérisée en ce que la base d'appui est formée d'un ou de plusieurs appuis ponctuels.

8. Passerelle déformable selon l'une quelconque des revendications précédentes, caractérisée en ce qu'elle est formée d'une succession (24) de lames transversales (25), en mouvement relatif par leurs extrémités (39) sur des bras latéraux de support et de guidage (26) et (27), portés à leurs extrémités par l'intermédiaire d'articulations palières (48) et (49).

9. Passerelle déformable selon la revendication précédente, caractérisée en ce que les lames (25) sont métalliques.

10. Passerelle déformable selon la revendication 8 ou 9, caractérisée en ce que les lames (25) sont immobilisées en écartement par la charge.

11. Passerelle déformable selon l'une des revendications 8 à 10, caractérisée en ce que les extrémités (39) des lames (25) sont en contact direct avec les bras de support et de guidage (26) et (27).

12. Passerelle déformable selon l'une des revendications 8 à 10, caractérisée en ce que les lames (25) sont déformables par fléchissement sous la charge jusqu'à une surface inférieure de contact et d'immobilisation.

13. Passerelle déformable selon l'une des revendications 8 à 10, caractérisée en ce que chaque extrémité (39) de chaque lame (25) est en contact d'appui et de blocage sous l'effet de la charge directement contre les bras de support et de guidage (26) et (27) ou à l'aide d'une pièce intermédiaire (28).

14. Passerelle déformable selon la revendication 8, caractérisée en ce que les extrémités (39) des lames (25) et le corps des lames (25) sont amenés en contact d'appui et de blocage sous l'effet de la charge.

15. Passerelle déformable selon l'une quelconque des revendications 1 ou 8, caractérisée en ce que les bras de support et de guidage (26) et (27) sont les tampons des wagons.

16. Passerelle déformable selon la revendication 8, caractérisée en ce que les lames métalliques (25) comportent des découpes longitudinales.

17. Passerelle déformable selon la revendication 8, caractérisée en ce qu'une structure élastique est formée d'une succession de pièces intercalaires (43) séparant les lames entre elles, pièces en forme de rondelles (44) à jupe tronconique (46) et à épaulement d'extrémité (45) sur chacune desquelles une des extrémités (39) des lames (25) est montée à calage.

18. Passerelle déformable selon la revendication 17, caractérisée en ce que les lames (25) sont séparées entre elles uniquement à leurs extrémités (39) par des pièces intercalaires (43) en matière élastique.

19. Passerelle déformable selon la revendication 17, caractérisée en ce que les lames (25) sont séparées entre elles sur toute leur longueur par des pièces intercalaires en matière élastique.

## Claims

1. Deformable platform connecting two carrying surfaces or floors (15) and (16) of two successive underframes (1) and (2), the platform extending above the coupling articulation (13) between the two underframes, the two surfaces or floors being carriers for a load formed, for example, by road vehicles, the aforementioned means together being able to form, in linear succession, a railway or road train, characterised by a deformable structure extending between two lateral coupling elements and the corresponding ends of the floors and comprising an immobilisation region fixed in position by supporting a load, for example the wheels of an axle, and comprising, relative to that fixed region, at least one deformable region (18) and/or (19) for absorbing, on bends, the displacements, away from and towards one another, of the corresponding, facing ends (20, 21) and (22, 23) of the two successive floors (15) and (16).

2. Deformable platform according to claim 1, characterised in that the region fixed in position is a non-deformable region.

3. Deformable platform according to claim 1 or 2, characterised in that the region fixed in position is a fixed support region (17) resulting from downward resilient material or structural deformation, under the effect of the load, leading to an immobilisation of that region (17) at least on bends.

4. Deformable platform according to claim 1 or 2, characterised in that the region fixed in position is a fixed support region (17) resulting from downward displacement, under the effect of the load, of a single or multiple carrying structure for the purpose of locking it at its ends and/or at its lower face.

5. Deformable platform according to claim 1 or 2, characterised in that the region fixed in position is a fixed support region (17) resulting from the downward displacement and deformation, under the effect of the load, of a carrying structure or of a plurality of carrying structures, for the purpose of locking it at its ends and/or at its lower face.

6. Deformable platform according to any one of the preceding claims, characterised in that the structure (14) coupling the corresponding ends (20, 21) and (22, 23) of the loading surfaces or floors (15) and (16) is capable of local bending or sagging at right-angles to the support contact of the load as far as a support base for the purpose of providing immobilising support on that base, the structure of the platform (14) being deformable in its plane by extension or by compression outside the immobilisation region.

7. Deformable platform according to the preceding claim, characterised in that the support base is formed by one or more localised supports.

8. Deformable platform according to any one of the preceding claims, characterised in that it is formed by a succession (24) of transverse straps (25), movable relative to one another at their ends (39) an lateral support and guide arms (26) and (27) which are carried at their ends by means of articulated bearings (48) and (49).

9. Deformable platform according to the preceding claim, characterised in that the strips (25) are of metal.

10. Deformable platform according to claim 8 or 9, characterised in that the strips (25) are immobilised with spacing by the load.

11. Deformable platform according to any one of claims 8 to 10, characterised in that the ends (39) of the strips (25) are in direct contact with the support and guide arms (26) and (27).

12. Deformable platform according to any one of claims 8 to 10, characterised in that the strips (25) are deformable by flexion under the load as far as a lower contact and immobilisation surface.

13. Deformable platform according to any one of claims 8 to 10, characterised in that each end (39) of each strip (25) is in support and locking contact under the effect of the load directly against the support and guide arms (26) and (27) or by means of an intermediate component (28).

14. Deformable platform according to claim 8, characterised in that the ends (39) of the strips (25) and the body of the strips (25) are brought into support and locking contact under the effect of the load.

15. Deformable platform according to either claim 1 or claim 8, characterised in that the support and guide arms (26) and (27) are the wagon buffers.

16. Deformable platform according to claim 8, characterised in that the metal strips (25) comprise longitudinal cut-outs.

17. Deformable platform according to claim 8, characterised in that a resilient structure is formed by a succession of interposed components (43) which separate the strips from one another and which are in the form of washers (44) having tapered skirts (46) and end shoulders (45) and into each of which one of the ends (39) of the strips (25) is wedged.

18. Deformable platform according to claim 17, characterised in that the strips (25) are separated from one another only at their ends (39) by interposed components (43) produced from resilient material.

19. Deformable platform according to claim 17, characterised in that the strips (25) are separated from one another over their entire length by interposed components produced from resilient material.

## Patentansprüche

1. Verformbare Brücke zum Verbinden von zwei Ladeebenen oder Bodenbelägen (15,16) zweier aufeinanderfolgender Fahrzeugchassis (1,2), die oberhalb der Gelenkverbindung (13) zwischen den beiden Chassis angeordnet ist, wobei die beiden Ebenen oder Bodenbeläge als Träger von Lasten, z. B. Straßenfahrzeugen, dienen und die Einheit aus vorgenannten Teilen in linearer Folge einen Eisenbahn- oder Lastzug bilden können, gekennzeichnet durch eine verformbare Struktur, die sich zwischen zwei Seitenelementen der Verbindung und zwischen den entsprechenden Enden der Beläge erstreckt und einen festlegbarem, unter Lasteinwirkung, z. B. der Räder einer Radachse, festgesetzten Bereich und einen bezüglich dieses festlegbaren Bereichs wenigstens einem verformbaren Bereich (18 und/oder 19) aufweist, um die Relativbewegungen der entsprechenden Enden (20,21 und 22,23) der beiden aufeinanderfolgenden Bodenbeläge (15,16) während der Kurvenfahrt aufzunehmen.

2. Verformbare Brücke nach Anspruch 1, dadurch gekennzeichnet, daß der festlegbare Bereich ein unverformbarer Bereich ist.

3. Verformbare Brücke nach Anspruch 1 oder 2, dadurch gekennzeichnet, daß der festlegbare Bereich eine feste Stützzone (17) ist, die sich aus einer nach unten gerichteten elastischen Verformung des Materials oder der Struktur unter Lasteinwirkung ergibt, um zumindest während der Kurvenfahrt ein Festlegen dieser Zone (17) zu erreichen.

4. Verformbare Brücke nach Anspruch 1 oder 2, dadurch gekennzeichnet, daß der festlegbare Bereich eine feste Stützzone (17) ist, die sich aus einer nach unten gerichteten Verlagerung einer einfachen oder mehrgliedrigen Tragstruktur unter Lasteinwirkung durch Blockieren ihrer Enden und/oder ihrer Unterseite ergibt.

5. Verformbare Brücke nach Anspruch 1 oder 2, dadurch gekennzeichnet, daß der festlegbare Bereich eine feste Stützzone (17) ist, die sich aus der nach unten gerichteten Verformung und Verlagerung einer oder mehrerer Tragstrukturen unter Lasteinwirkung beim Blockieren ihrer Enden und/oder ihrer Unterseite ergibt.

6. Verformbare Brücke nach einem der vorangehenden Ansprüche, dadurch gekennzeichnet, daß die die entsprechenden Enden (20,21 und 22,23) der Ladeebenen oder Beläge (15,16) verbindende Struktur (14) bei Auflagekontakt der Last bis zu einer Stützbasis zum Festlegen auf dieser Basis lokal nachgiebig oder durchbiegbar ist, wobei die Struktur der Brücke (14) außerhalb des festlegbaren Bereichs in ihrer Ebene dehnbar oder komprimierbar ist.

7. Verformbare Brücke nach Anspruch 6, dadurch gekennzeichnet, daß die Stützbasis von einem oder mehreren Abstützstellen gebildet ist.

8. Verformbare Brücke nach einem der vorangehenden Ansprüche, dadurch gekennzeichnet, daß sie von einer Folge (24) transversaler Lamellen (25) gebildet ist, die mit ihren Enden an seitlichen Trag- und Führungsarmen (26,27) relativbeweglich und an ihren Enden unter Zwischenschaltung von Gelenkstufen (48, 49) getragen sind.

9. Verformbare Brücke nach einem der vorangehenden Ansprüche, dadurch gekennzeichnet, daß die Lamellen (25) aus Metall sind.

10. Verformbare Brücke nach Anspruch 8 oder 9, dadurch gekennzeichnet, daß die Lamellen (25) unter Lasteinwirkung auf Abstand festgelegt sind.

11. Verformbare Brücke nach einem der Ansprüche 8 bis 10, dadurch gekennzeichnet, daß die Enden (39) der Lamellen (25) in direktem Kontakt mit den Trag- und Führungsarmen (26,27) stehen.

12. Verformbare Brücke nach einem der Ansprüche 8 bis 10, dadurch gekennzeichnet, daß die Lamellen (25) unter Lasteinwirkung bis auf eine untere Kontakt- und Festsetzebene durchbiegbar sind.

13. Verformbare Brücke nach einem der Ansprüche 8 bis 10, dadurch gekennzeichent, daß jedes Ende (39) jeder Lamelle (25) unter Lasteinwirkung unmittelbar oder mit Hilfe von Zwischenstücken (28) in Stütz- und Blockierkontakt gegen die Trag- und Führungsarme (26,27) steht.

14. Verformbare Brücke nach Anspruch 8, dadurch gekennzeichnet, daß die Enden (39) und die Körper der Lamellen (25) unter Lasteinwirkung in Stütz- und Blockierkontakt gebracht sind.

15. Verformbare Brücke nach einem der Ansprüche 1 bis 8, dadurch gekennzeichnet, daß die Trag- und Führungsarme (26, 27) die Puffer der Waggons sind.

16. Verformbare Brücke nach Anspruch 8, dadurch gekennzeichnet, daß die Metall-Lamellen (25) Längsausschnitte aufweisen.

17. Verformbare Brücke nach Anspruch 8, dadurch gekennzeichnet, daß eine Folge von zwischen den Lamellen eingefügten, und diese voneinander trennenden Zwischenstücken (43) eine elastische Struktur bilden, wobei die Zwischenstücke die Form von Scheiben mit Kegelmantel (46) und endständiger Schulter (45) auf die je eines der Enden (39) der Lamellen (25) aufgesetzt ist.

18. Verformbare Brücke nach Anspruch 17 dadurch gekennzeichnet, daß die Lamellen (25) ausschließlich an ihren Enden (39) von den Zwischenstücken (43) aus einem elastischen Material voneinander getrennt sind.

19. Verformbare Brücke nach Anspruch 17, dadurch gekennzeichnet, daß die Lamellen (25) entlang ihrer gesamten Länge von den Zwischenstücken aus einem elastischen Material voneinander getrennt sind.
